Europäisches Patentamt

(19) European Patent Office

Office européen des brevets

(11) Numéro de publication: **0 089 440**

**B1**

(12) **FASCICULE DE BREVET EUROPÉEN**

(45) Date de publication du fascicule du brevet:
**13.08.86**

(21) Numéro de dépôt: **82430008.1**

㉒ D~~....  ..  ... .. 74.03.82~~

(51) Int. Cl.⁴: **G 06 F 13/12,** G 06 F 13/14

---

(54) Procédé et dispositif d'échange d'information entre des terminaux et une unité de commande centrale.

---

(43) Date de publication de la demande:
**28.09.83 Bulletin 83/39**

(45) Mention de la délivrance du brevet:
**13.08.86 Bulletin 86/33**

(84) Etats contractants désignés:
**DE FR GB IT**

(56) Documents cité:
**US-A-4 001 790**
**US-A-4 067 059**

**IBM TECHNICAL DISCLOSURE BULLETIN, vol. 21, no. 12, mai 1979, page 4882, New York (USA); J. CALVIGNAC et al.: "Adapter high level interface"**
**IBM TECHNICAL DISCLOSURE BULLETIN, vol. 24, no. 6, novembre 1981, pages 2779-2781, New York (USA); R.C. BOOTH: "Rapid set-up for cycle-steal commands"**
**IBM TECHNICAL DISCLOSURE BULLETIN, vol. 20, no. 11B, avril 1978, pages 4692-4695, New York (USA); R.E. BIRNEY et al.: "Suppress exception mechanism for input/output devices".**
**IBM TECHNICAL DISCLOSURE BULLETIN, vol. 21, no. 7, décembre 1978, pages 2633-2645, New York (USA); D.M. NAGEL et al.: "Programmable communications subsystem having controller incorporating microprocessor".**
**Jahrbuch des eleKtron. Fernmeldewesens, 1967, pages 9-29**

(73) Titulaire: **International Business Machines Corporation, Old Orchard Road, Armonk, N.Y. 10504 (US)**

(72) Inventeur: **Castel, René, Route des Vallettes Sud, F-06490 Tourette Sur Loup (FR)**
Inventeur: **Calvignac, Jean-Louis, Chemin Les Vallières, F-06610 La Gaude (FR)**
Inventeur: **Draper, Wilburn, 7612 Harps Mill Road, Raleigh North Carolina 27609 (US)**

(74) Mandataire: **Lattard, Nicole, Compagnie IBM France Département de Propriété Industrielle, F-06610 La Gaude (FR)**

(56) Documents cité: (suite)
**IEEE Transactions on Nuclear Science, Vol. NS-27, numéro 1, février 1980, pages 612-621**

---

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

### Domaine de l'Invention

La présente invention concerne dans un contrôleur de communication un procédé d'échange d'informations entre l'unité de commande centrale et les adaptateurs de lignes de communications et un dispositif mettant en oeuvre ce procédé.

Les contrôleurs de communication comprennent généralement une unité de commande centrale associée à une mémoire dans laquelle est stocké le programme de commande de réseau et à un interface entrée/sortie connecté à un bus d'entrée/sortie. Les terminaux gérés par le contrôleur de communication sont connectés à des adaptateurs de lignes eux-mêmes attachés au bus d'entrée/sortie. D'autre part, une ou plusieurs unités de traitement central sont connectés au bus d'entrée/sortie, le rôle du contrôleur de communication étant d'assurer et de gérer les échanges de données entre les terminaux et la ou les unités de traitement centrales.

### Art Antérieur

Ainsi qu'il est décrit dans l'article paru dans l'IBM Technical Disclosure Bulletin, Vol. 21, No. 12 en mai 1979, à la page 4882, un moyen pour améliorer les échanges d'informations entre l'unité de commande centrale consiste à réaliser le plus possible des opérations de transferts en vol de cycle pour diminuer le nombre des interruptions dans le déroulement du programme.

L'article paru dans l'IBM Technical Disclosure Bulletin, Vol. 24, No. 6 en décembre 1981 - pages 2779 à 2781 - décrit un mécanisme permettant de réaliser en vol de cycle des opérations de transfert de données et de paramètres nécessaires au transfert des données.

L'article paru dans l'IBM Technical Disclosure Bulletin, Bul. 21, No. 7 en décembre 1978 - pages 2633 à 2645 - décrit un contrôleur de communication et plus particulièrement l'unité de commande centrale du contrôleur dans lequel les adaptateurs ne comportent que des circuits.

L'article paru dans le livre: "Jahrbuch des Elektronischen Fernmeldewesens" en 1967 aux pages 9 à 29, décrit un système de traitement de données dans lequel des unités périphériques sont connectées à une unité centrale par un canal. Le document décrit le principe du canal multiplex ou simple et les ordres et commandes généralement utilisés dans cet environnement.

L'article paru dans IEEE Transactions on Nuclear Science, Vol. NS-27 No. 1, février 1980 - pages 612 à 620 - décrit une architecture de bus et le protocole d'échange maître-esclave utilisé sur ce bus.

Tous ces documents décrivent différents concepts couramment utilisés dans les systèmes de traitements de données. La présente invention qui concerne un procédé et un dispositif d'échange d'informations entre l'unité de commande et les adaptateurs comportant eux-mêmes un microprocesseur, combine de façon avantageuse certains de ces concepts pour que le nombre d'opérations d'entrée/sortie commandées par le programme du contrôleur, nécessaire pour la réalisation de l'échange soit réduit au minimum.

### Résumé de la présente Invention

La présente invention a donc pour objet une procédé d'échange d'informations entre une unité de commande centrale et des lignes de communications dans lequel les types d'opération d'entrée/sortie sont choisies de telle façon que leurs nombres soient le plus faible possible.

La présente invention concerne un procédé d'échange d'information utilisable dans un contrôleur de communications du type comportant une unité de commande centrale associée à une mémoire dans laquelle une partie est réservée au stockage d'un programme de commande de réseau, ladite unité de commande centrale étant connectée par un interface d'entrée/sortie à un bus d'entrée/sortie sur lequel sont attachés d'une part des adaptateurs de lignes de communications comprenant un microprocesseur et une mémoire et d'autre part au moins une unité de traitement central, l'unité de commande centrale pouvant communiquer avec les adaptateurs par des opérations de transfert en vol de cycle (AIO) et des opérations d'entrée/sortie (PIO).

Le procédé comprend à l'initialisation l'établissement dans la mémoire de l'unité de commande, d'une table de correspondance à partir d'une adresse de départ déterminée, cette table comportant une première et une seconde positions d'adresse par ligne de communications dans chacune desquelles est stockée l'adresse de l'emplacement d'une zone de la mémoire réservée au stockage d'informations de contrôle (paramètre/état) correspondant à l'interface émission et à l'interface réception de chaque ligne de communication et le transfert par une première série d'opérations d'entréejsortie (PIO) de type sortie de l'adresse de départ, à chacun des adaptateurs. Ensuite pour une première communication il comprend l'envoi par une seconde opération d'entrée/sortie (PIO) de type sortie de démarrage de ligne initial d'un premier code spécifiant l'adresse d'un adaptateur à sélectionner, l'envoi d'un signal d'accusé de réception par l'adaptateur qui a reconnu son adresse et la mémorisation du premier code dans l'adaptateur, l'envoi par l'unité de commande centrale d'un second code spécifiant l'adresse de l'interface d'une ligne sélectionnée et d'une commande d'initialisation destinée à l'interface sélectionné, le calcul par le microprocesseur de l'adaptateur des adresses dans la table correspondant aux interfaces de la ligne sélectionnée en fonction des premier et second codes et de l'adresse de départ de la table de correspondance et le transfert par vol de cycle des informations contenues à ces adresses dans des blocs de contrôle associés aux emplacements de la mémoire du microprocesseur affectés aux interfaces de ladite ligne et l'échange par vol de cycle entre l'unité de commande centrale et l'adaptateur des informations de la zone paramètre affectée à l'interface sélectionné et de données correspondantes.

Ce procédé comprend de plus dans un mode d'échange normal l'envoi par l'unité de commande centrale par une troisième opération d'entrée/sortie de type sortie de démarrage de ligne, du premier code spécifiant l'adresse d'un adaptateur à sélectionner, l'envoi d'un signal d'accusé de réception par l'adaptateur qui a reconnu son adresse, l'envoi du second code spécifiant l'adresse de l'interface sélectionné d'une ligne que l'adaptateur sélectionné utilise pour localiser le bloc de contrôle contenant l'adresse de la zone paramètre/état affectée à l'interface, et d'une commande de transfert de message destinée à l'interface, l'échange par vol de cycle des informations de la zone paramètre située à l'adresse contenu dans le bloc de contrôle ainsi localisé de la mémoire de l'unité de commande centrale à la zone paramètre de la mémoire du microprocesseur affectée à l'interface.

Pour mettre en oeuvre le procédé de la présente invention il est prévu dans chacun des adaptateurs un circuit qui permet de reconnaître le code spécifiant l'adresse envoyée sur le bus d'entrée/sortie par l'unité de commande centrale, ledit code comportant un premier champ représentant la position d'un panneau comportant un ou deux adaptateurs, chaque panneau étant supposé connecté à un nombre d'interface égal à 2k, et un second champ représentant le type de panneau.

## Brève Description des Figures

La figure 1 représente le schéma général d'un contrôleur de communication dans lequel peut être incorporée la présente invention.

La figure 2 représente le schéma de l'unité de commande centrale CCU.

La figure 3 représente schématiquement un ensemble processeur-dispositif de balayage et sa connexion au bus d'entrée/ sortie.

La figure 4 représente les arrangements des mémoires dans l'unité centrale CCU et les adaptateurs.

La figure 5 représente le mécanisme de formation des champs d'adressage.

La figure 6 représente le schéma du circuit de reconnaissance d'adresses.

## Description Détaillée de l'Invention

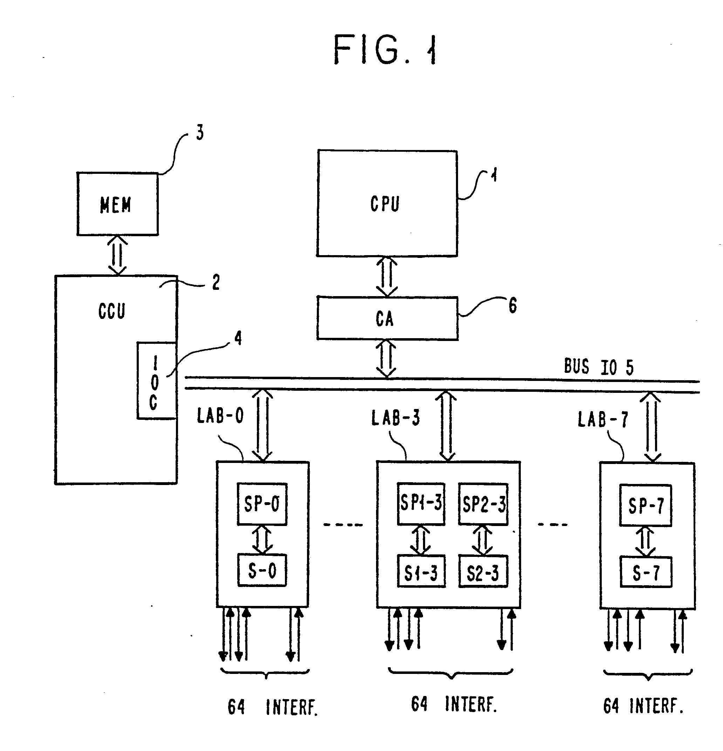

Sur la figure 1, est représenté le schéma général d'un contrôleur de communications pour montrer l'environnement dans lequel peut être utilisé la présente invention. Le contrôleur de communications contrôle l'échange de données entre des terminaux conmectés à des lignes-de communications et au moins à un système de traitement cendral CPU 1, qui peut être un ordinateur du type IBM 370.

Pour qu'un échange ait lieu dans le sens terminaux vers système central CPU, le contrôleur a pour fonction de balayer les lignes de communications, de multiplexer les données arrivant sur ces lignes et de transmettre le train de données ainsi obtenu au système central par un canal grande vitesse.

Pour qu'un échange ait lieu dans le sens système central vers terminaux, le contrôleur reçoit les données multiplexées à transmettre à partir du système central sur un canal à grande vitesse, démultiplexe les données et les achemine aux terminaux désirés désignés par adressage.

Comme on peut le voir sur la figure 1, le contrôleur comprend une unité de commande centrale CCU 2 qui est du même type que celle utilisée dans le contrôleur de communication IBM 3705. Cette unité de commande est un processeur qui fonctionne sous commande d'un programme de contrôle de réseau à plusieurs niveaux d'interruption. Chaque évènement lorsqu'il se produit crée une interruption à un niveau donné du programme qui fait que le code de traitement de l'évènement se déroule. L'unité de commande CCU est associée à une mémoire principale 3 et à un interface de commande d'entrée/sortie IOC 4.

A l'interface IOC 4 est connecté un bus d'entrée/sortie IO 5. Le système de traitement centrale CPU 1 est connecté au bus IO 5 par un adaptateur de canal CA 6.

Les lignes de communication sont attachées à un certain nombre de panneaux de lignes LAB 0 à LAB 7 dans un mode de réalisation préfère. A chaque panneau sont attachés au maximum 64 interfaces, ce qui correspond à 32 lignes de communication bidirectionnelles, constituées d'un interface émission et d'un interface réception.

Chaque panneau comporte les circuits constituant les adaptateurs de lignes. Chaque adaptateur comprend un processeur de balayage SP et un dispositif de balayage de ligne S correspondant. Le processeur de balayage est un microprocesseur qui permet de décharger l'unité de commande centrale de certaines fonctions, notamment celles qui concernent le traitement de données sur les lignes associées. Les dispositifs de balayage S proprement dits comportent des mémoires dans lesquelles sont stockées les données reçues ou à transmettre. Un panneau peut comporter suivant la configuration du réseau, un ou deux adaptateurs.

3

Sur la figure on n'a représenté que trois panneaux: LAB-0, LAB-3 et LAB-7. Le panneau LAB-3 est supposé comporter deux processeurs: SP1-3 et SP2-3. Les éléments SP et S des autres panneaux, sont dénommés SP-0, S-0 et SP-7 et S-7 respectivement.

Les panneaux sont connectés aux bus d'entrée/sortie IO 5.

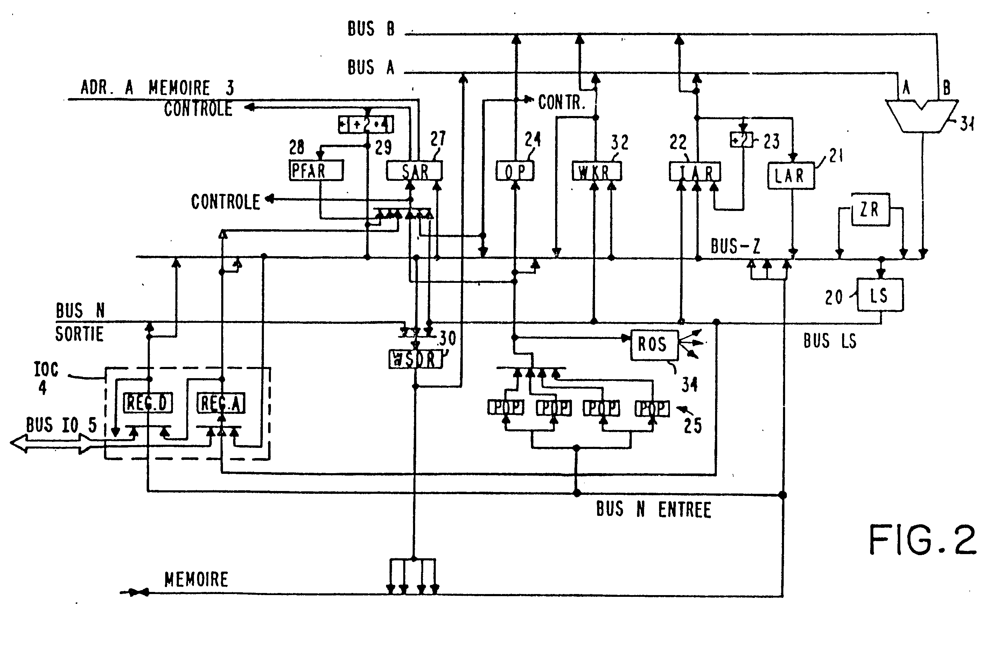

Le schéma de circulation des données de l'unité de commande centrale est représenté sur la figure 2. Cette unité comprend les circuits et les chemins de données qui permettent d'exécuter un jeu d'instructions constitué par les cinquante et une instructions du contrôleur IBM 3705 auxquelles ont été ajoutées deux instructions supplémentaires qui seront données ultérieurement. De plus ils permettent d'adresser la mémoire, de réaliser le traitement logique et arithmétique des données et de commander les adaptateurs qui sont attachés à cette unite.

Cette unité comprend une mémoire locale LS 20 dans laquelle sont définies à des positions d'adresses données, quarante registres généraux utilisés par le programme de contrôle pour l'exécution des instructions et le traitement des données. Ces registres sont répartis en cinq groupes de huit registres. Chaque groupe est affecté à un niveau de programme parmi les cinq niveaux de programme possibles. Ceci permet à un programme se déroulant à un niveau d'être interrompu à un autre niveau sans qu'il soit nécessaire de sauver le contenu des registres.

Elle comporte de plus des registres externes qui sont utilisés pour emmagasiner les informations nécessaires pour la communication entre le programme de commande et les circuits proprememt dits. Ces registres externes contiennent de l'information intéressant le fonctionmement des circuits et/ou du programme. En utilisant une instruction d'entrée le programme de commande peut charger le contenu d'un registre externe dans un registre général où il peut opérer sur les données. Des instructions de sortie permettent de charger un registre externe avec le contenu du registre général déterminé par l'instruction. Ces registres sont les suivants:

. Un registre d'adresse antérieur LAR 21 qui contient l'adresse de la dernière instruction exécutée avant l'instruction en cours d'execution. Ce registre LAR 21 est chargé à partir du registre d'adresse d'instructions IAR 22 au début de l'exécution de chaque instruction. Un incrémenteur 23 permet de faire passer le registre IAR à une valeur pointant sur l'adresse suivante.

. Un registre d'opération OP 24 est utilisé pour stocker les seize premiers bits (1/2 mot) de l'instruction en cours d'exécution. Ce registre est chargé à partir de quatre registres de "recherche à l'avance" POP 25, qui permettent de rechercher les instructions dans la mémoire principale connectée à l'unité de commande, dans laquelle une partie est réservée au stockage du programme de commande.

L'unité de commande comprend un registre d'adresse de mémoire SAR 27 (22 bits plus 3 bits de parité), un registre d'adresse d'instructions recherchées à l'avance PFAR 28 avec un incrémenteur d'adresses, un registre d'écriture de données en mémoire WSDR 30. Une unité arithmétique et logique 31 permet d'effectuer les operations arithmétique et logiques commandées par le programme, cette unité étant associée à des registres de travail WKR 32. Le registre ZR permet de stocker les données sur le bus Z.

L'interface IOC 4 comporte deux registres: le registre D (16 bits d'information plus 2 bits de parité) est utilisé avec le bus IO pour l'échange de toutes les adresses, commandes et données allant et venant des adaptateurs. Le registre A est un registre à 25 bits (22 bits d'information plus 3 bits de parité). Il est utilisé d'une façon qui sera décrite ultérieurement.

La mémoire morte 34 contient des mots de commande CW qui sont nécessaires pour contrôler les opérations à réaliser par l'unité de commande.

Cette unité étant du même type que celle du contrôleur de communication IBM 3705, ne sera pas décrite plus en détail.

Les deux instructions qui ont été ajoutées au jeu d'instructions du contrôleur IBM 3705 sont les suivantes:

La première de ces instructions est une instruction d'entrée/ sortie IOH du type RR (registre à registre) de format suivant:

| 0 | R2 | 0 | R1 | X"50" |
|---|----|---|----|-------|
| 0 | 1    3 | 4 | 5    7 | 8                    15 |

Cette instruction provoque le transfert du contenu du registre déterminé par le champ R1 à un adaptateur canal ou ligne déterminé par le contenu du champ R2 ou vice-versa. Le contenu du registre déterminé par R1 est chargé dans le registre A. Cette instruction est exécutable aux niveaux de programme 1, 2, 3 et 4 seulement. Si on essaie de l'exécuter au niveau 5 il en résultera une demande d'interruption au niveau 5. Si le processeur ne reçoit pas de réponse valide à l'intérieur d'un temps prédeterminé une interruption de niveau 1 "non réponse adaptateur" se produit. X "50" signifie que le second octet de l'instruction contient 50 en hexadécimal.

La seconde de ces instructions est une instruction d'entrée/ sortie valeur immédiate IOH du type RA de format suivant:

```
 _____
!                        !          !                         !
!   0  0  0  0  0        !    R1    !      X "70"              !
!_____!_____!_____!
 0                      4  5       7 8                        15
```

```
 _____
!                                                              !
!                  Valeur immédiate - I                        !
!_____!
 16
```

Cette instruction transfère le contenu du registre déterminé par R1 à un registre externe ou vice-versa. Ce registre externe est déterminé par la valeur immédiate I du second demi-mot. Cette instruction peut être utilisée pour adresser les adaptateurs de canaux ou de lignes.

Les échanges entre l'unité de commande et les adaptateurs se font suivant deux types d'opération: des opérations initialisées par programme PIO, et des opérations initialisées par les adaptateurs AIO, qui correspondent à des échanges d'informations en vol de cycle. Les instructions d'entrée/sortie IOH et IOHI permettent de réaliser des opérations PIO.

Le bus d'entrée/sortie IO 5 est un bus classique, il comporte les lignes nécessaires pour réaliser les deux types d'opérations.

Il y a 18 lignes affectées à l'échange des bits de données (un demi-mot divisé en octet 0 B0' et octet 1 B1 plus un bit de parité pour chaque octet). Quinze lignes sont affectées à l'échange des étiquettes et des commandes.

Le tableau ci-dessous donne les signaux qui sont envoyés sur ces lignes.

| LIGNES DU BUS IO | | SENS | |
|---|---|---|---|
| | | CCU | ADAPTATEUR |
| Entrée Sortie | IO | ------→ | |
| Etiquette adresse | TA | ------→ | |
| Etiquette donnée | TD | ------→ | |
| Sortie Lecture/écriture | R/W | ------→ | |
| Arrêt | HALT | ------→ | |
| Restauration | RES | ------→ | |
| Vol de cycle accepté | CSG | ------→ | |
| Demande de vol de cycle | CSR | ←------ | |
| Multiplet valide | VB | ←------ | |
| Demi-mot valide | VH | ←------ | |
| Partié valide | PV | ←------ | |
| Demande d'interruption supprimé | IRR | ←------ | |
| Fin de chaîne | EOC | ←------ | |
| Modification | M | ←------ | |
| Multiplet de données 0 | B0 | ←------→ | |
| Multiplet de données 1 | B1 | ←------→ | |

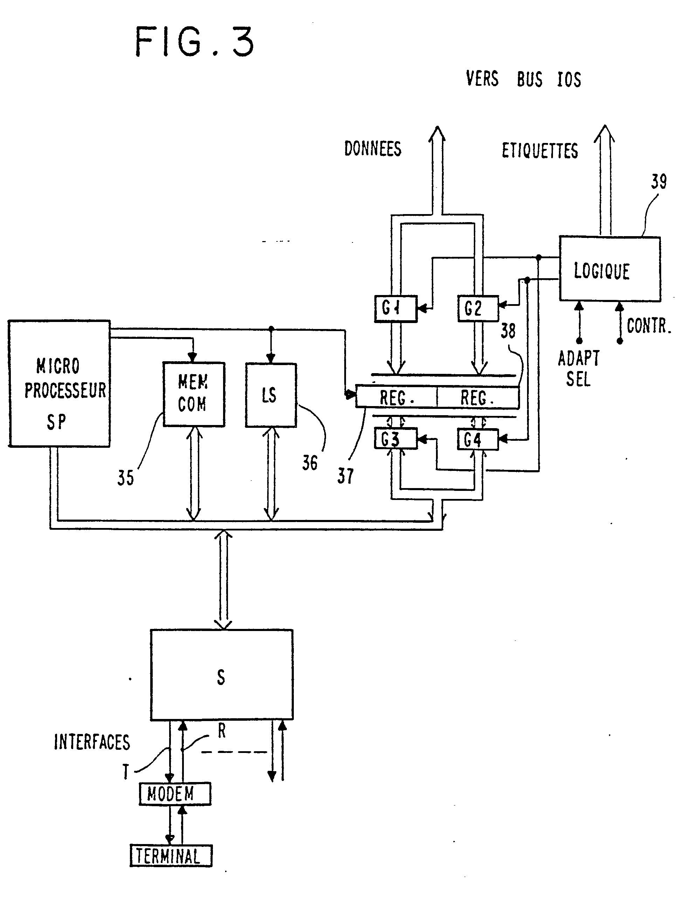

Sur la figure 3 est représenté schématiquement un adaptateur de lignes comprenant un microprocesseur SP associé à une mémoire 35 et à une mémoire locale LS 36, le microcode de commande du microprocesseur est stocké dans la mémoire 35, et la mémoire locale comprend les registres généraux et externes du microprocesseur en différentes positions. Le microprocesseur est connecté au dispositif de balayage proprement dit S, qui comporte des circuits logiques et des mémoires dans lesquelles sont stockées temporairement les données et commandes à échanger avec les terminaux, par l'intermédiaire des interfaces d'émission et de réception T et R et éventuellement de modem.

Les échanges avec l'unité de commande centrale CCU se font suivant des protocoles qui seront définis ci-après par l'intermédiaire de deux registres d'interface 37 et 38 dans lesquelles sont stockées les informations venant du bus IO 5 pour une opération CCU vers adaptateur ou venant de la mémoire 35 pour une operation adaptateur vers CCU.

Une logique 39 reçoit et envoie les étiquettes du/au bus IO 5 pour amener aux instants appropriés les signaux TA et TD qui ouvriront des portes G1, G2, G3 et G4 afin de laisser passer les informations pour les amener aux emplacements désirés suivant le type d'opération. Le signal adaptateur selectionne ADAPT. SEL. est généré par un circuit logique qui sera décrit ultérieurement. Le circuit 39 reçoit aussi des signaux de CONTROLE qui sont générés par les circuits du microprocesseur, par exemple les signaux d'indication de parité afin de générer les étiquettes appropriées à envoyer à l'unité centrale CCU.

Les registres 37 et 38 comportent chacun seize positions de bits d'information. Ils sont en fait constitués par des positions de la mémoire locale 36 et en tant que tels ils peuvent être adresses par le microprocesseur.

On va maintenant décrire le déroulement des opérations résultant d'une instruction IOH ou IOHI.

Lorsqu'une instruction IOH ou IOHI est décodée, l'interface IOC est testée, si elle est trouvée libre le champ défini par R2 pour l'instruction IOH ou I pour l'instruction IOHI est charge dans le registre D et le champ défini par R1 (champ de données) est chargé dans le registre A dans le cas d'une opération d'écriture. Ensuite l'opération est démarrée et l'IOC est indiqué occupé.

L'IOC initialise cette opération du type PIO en mettant au niveau haut les signaux IO et Sortie, Lecture/Ecriture. Tous les adaptateurs attachés à ce bus doivent supprimer les demandes d'interruption qu'ils pouvaient être en train de présenter, doivent mettre au niveau haut la ligne IRR et doivent mettre au niveau bas la ligne VH.

L'interface IOC place le contenu du registre D sur le bus de données. Une fois qu'il reconnaît la fin du signal VH et après le temps de traitement interne, la ligne TA est excitée et l'information passe du bus de données dans le registre 35, la porte G1 étant ouverte.

Tous les adaptateurs qui reçoivent le signal TA examinent les bits d'adresse pour déterminer quel adaptateur est adressé. L'adaptateur sélectionné répond avec un signal VH. Lorsque l'interface IOC reçoit VH il termine TA et enlève le contenu du registre D du bus de données. Après avoir reconnu la fin de TA l'adaptateur termine VH.

A ce moment dans la séquence IO, l'opération dépendra du type d'opération: entrée ou sortie.

Pour une opération de sortie, CCU vers adaptateur, l'interface IOC place le demi-mot de données du registre déterminé par R1 sur le bus de données pour son transfert au temps approprié dans le registre 38. Après le temps de traitement interne l'IOC excite la ligne TD (étiquette données). Après avoir reconnu cette étiquette TD, l'adaptateur excite VH (demi-mot valide). Lorsque l'IOC reconnait VH il termine les signaux TD, IO, et sortie R/W et enlève les données du bus de données. Une fois qu'il a reconnu la fin de TD, l'adaptateur termine VH.

Pour une opération d'entrée/adaptateur vers CCU, l'IOC termine sortie R/W et excite TD. Lorsque l'adaptateur reconnaît TD il place les données demandées sur le bus de données par l'intermédiaire du registre 38. Une fois que les données ont été placées avec une parité correcte, l'adaptateur excite les lignes PV et VH. Après le temps de traitement interne suivant la reconnaissance de VH, (la parité sera engendrée si la ligne de parité valide n'est pas excitée) l'IOC chargera les données dans le registre D, la logique du CCU charge les données dans le registre spécifié par R1.

Lorsque les données sont chargées dans le registre D, l'IOC termine TD.

Lorsque l'adaptateur reconnaît la fin de TD il termine VH et PV et enleve les données du bus. Lorsque l'IOC reconnaît la fin de VH, il termine IO.

La fin du signal IO fait que l'adaptateur précédemment sélectionné ne l'est plus. Il s'ensuit que tous les adaptateurs qui ont des demandes d'interruption en attente envoient leurs demandes et terminent leur signal IRR. Tout adaptateur qui n'a pas de demande d'interruption en attente termine son signal IRR à la reconnaissance de la fin du signal IO. Tous les adapteurs excitent VH avant de terminer IRR.

Après avoir reconnu que IRR n'est plus excité et que VH est excité, l'IOC restaure le signal IOC occupé.

On va maintenant passer à la description d'une opération AIO.

Elle diffère de l'opération précédente en ce que le transfert des données est déclenche et contrôlé par l'adaptateur et que plusieurs unités de données peuvent être transférées durant l'opération.

Un adaptateur démarre une opération AIO en excitant la ligne CSR (demande vol de cycle). A la réception de CSR, l'IOC s'il n'est pas occupé amorce une opération IOC, et il se signale alors occupé et met au niveau haut la ligne IO. Tous les adaptateurs répondent de la même façon que pour une opération PIO. Tous ceux qui reçoivent le signal IO excitent la ligne IRR, et tous ceux qui avaient précédemment placés les demandes d'interruption sur le bus de données les enlèvent et suppriment le signal VH. Le signal VH est aussi supprimé s'il n'y avait pas de demande d'interruption.

Lorsque l'IOC a identifié que tous les adaptateurs ont supprimé leur signal VH, il excite la kigne CSG (vol de cycle accordé). Cette ligne relie par une boucle les adaptateurs dans un ordre de priorité. Si deux adapteurs font une demande de vol de cycle en même temps, le premier adaptateur dans la boucle recevra le signal CSG et empêchera sa propagation en aval dans la boucle.

Lorsqu'un adaptateur demandeur, reçoit le signal CSG, il place un mot de commande de vol de cycle CSCW sur le bus de données et excite VH et PV. Il termine aussi CSR.

Après le temps de traitement interne suivant la reconnaissance de VH, l'IOC vérifie la parité du mot CSCW et termine l'opération AIO si la parité n'est pas correcte en envoyant le signal HALT.

A ce point de la séquence AIO, l'IOC peut prendre diverses actions suivant la valeur chargée dans le CSCW.

Le transfert des données par une opération AIO se fait sous contrôle de l'adaptateur. L'adaptateur au moyen du mot CSCW indique à l'IOC à quelle adresse en mémoire 3 commencer à obtenir ou à charger les données. Une fois démarrée l'opération se poursuit jusqu'à ce que l'adaptateur signale à l'IOC qu'il doit s'arrêter.

La procédure d'échange des données entre l'IOC et l'adaptateur est la même que pour une opération PIO sauf pour le dernier transfert.

Si le dernier transfert est un transfert d'un demi-mot (2 octets), l'adaptateur excite la ligne "fin de chaîne" EOC au lieu de VH.

Si le dernier transfert est un transfert d'octet vers ou en provenance d'un adaptateur traitant des demi-mots, l'adaptateur excitera la ligne modificateur M et octet valide VB.

Lorsque l'IOC reconnaît EOC ou VB et M il termine TD (étiquette données). L'adaptateur reconnait la fin de TD et supprime les données dans le cas d'une opération de lecture et termine EOC ou VB et M.

Une extinction se produit dans l'interface IOC lorsqu'un adaptateur ne répond pas (dans les 60 microsecondes) à l'excitation ou à la désexcitation de l'une quelconque des cinq étiquettes d'interface VB; VH, EOC, IRR et M. Ceci provoque l'achèvement de la suite de l'opération en envoyant l'étiquette HALT aux adaptateurs et une opération de vérification de l'IOC est réalisée.

La procédure d'échange entre l'unité centrale et les adaptateurs de lignes est, conformément à la présente invention, rendue la plus efficace possible en limitant au maximum le nombre des opérations d'entrée/sortie de type PIO. L'interface n'utilise qu'une seule instruction de sortie et qu'une seule instruction d'entrée du type IOH pendant le fonctionnement normal. Une de ces instructions de sortie appelée DEMARRAGE DE LIGNE initialise dans les processeurs des adaptateurs de lignes, des opérations qui dans les systèmes de l'art antérieur type IBM 3705 nécessitaient des séquences de multiples instructions d'entrée/sortie. L'instruction d'entrée appelée OBTENTION IDENTIFICATION DE LIGNE GET L ID déclenche le processus d'auto-sélection d'un adaptateur et identifie l'interface faisant une demande de service pendant une séquence d'interruption du CCU de niveau 2.

Trois autres instructions de sortie appelées ETABLISSEMENT TABLE VECTEUR LIGNES ADRESSE HAUTE, ETABLISSEMENT TABLE VECTEUR LIGNES ADRESSE BASSE et DEMARRAGE DE LIGNE INITIAL, qui seront détaillées ultérieurement sont utilisées au démarrage de la procédure d'échange entre l'unité de commande CCU travaillant sous contrôle du programme de commande de réseau, et les adaptateurs de lignes.

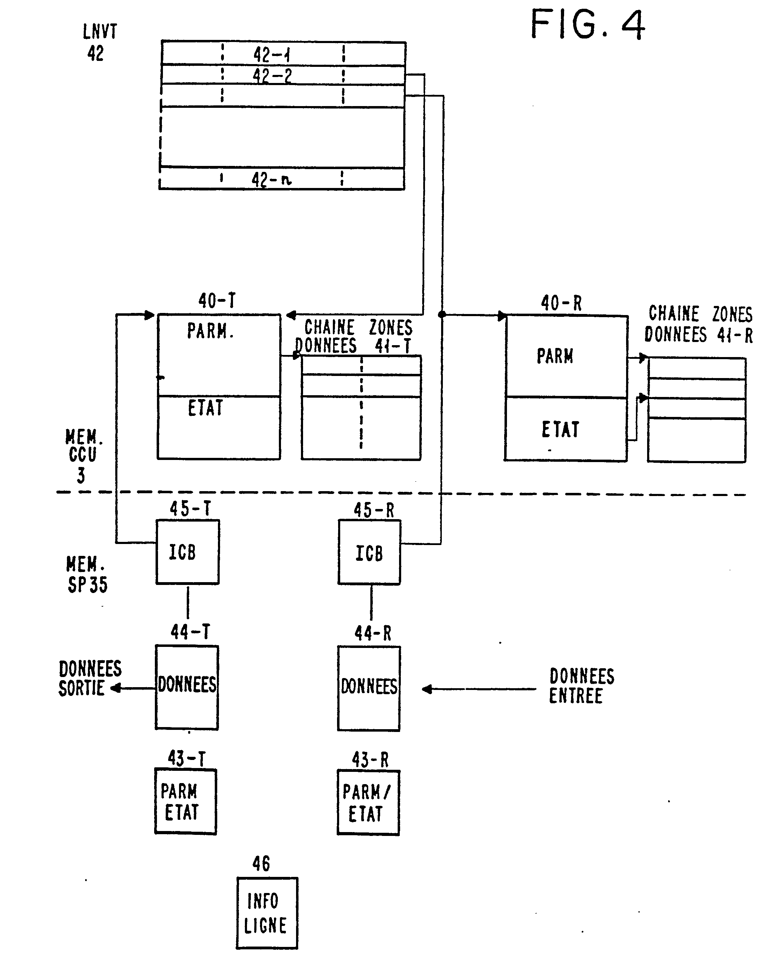

On va maintenant se référer à la figure 4 pour décrire les arrangements des mémoires 3 et 35. Le programme de commande résidant dans la mémoire 3 du CCU doit affecter un champ de longueur fixe de positions mémoire pour chaque interface de ligne servi. Ce champ appelé zone parm/état 40, est utilisé dans le transfert d'information de commande et d'état entre le CCU et les processeurs SP des adaptateurs de lignes. L'information est transférée en vol de cycle par bloc de 16 octets (ou moins) sous contrôle du processeur SP gérant la ligne. La zone parm/état est constituée d'une zone paramètre de 16 octets de long et d'une zone état de 12 octets de long.

Les zones paramètres sont utilisées pour transmettre aux processeurs SP les paramètres nécessaires à l'exécution d'une commande. La zone état est utilisée pour transmettre les informations d'état caractérisant la fin d'une opération, à l'unité de commande. A la réception d'une instruction DEMARRAGE DE LIGNE, le processeur SP gérant la ligne prendra par vol de cycle l'information de la zone paramètre 40, exécutera la commande et enverra par vol de cycle l'information d'état dans la zone état 40 puis demandera une interruption au CCU.

A chaque zone parm/état est associée une chaîne de zones mémoire 41 dans laquelle sont stockées les données à échanger proprement dite.

Sur la figure 4 les éléments suivis d'un suffixe T se rapportent à un interface Emission et les éléments suivis d'un suffixe R se rapportent à un interface Réception.

On va maintenant décrire les différentes opérations d'entrée/ sortie qui sont nécessaires pour les opérations d'initialisation.

Dans la mémoire 3, est prévue une table de vecteurs de lignes LNVT, comme représenté en 42 sur la figure 4. Elle est utilisée par les routines du programme de commande de réseau pour localiser l'information de commande associée à un interface de communication uniquement quand son adresse est connue. Chaque entrée 42-1 à 42-n dans la table est associée à un seul interface de lignes et contient le mot complet (4 octets) d'adresse de la zone parm/état associée à l'interface.

La table LNVT peut être placée n'importe où dans la mémoire 3, elle est définie en exécutant des instructions de sortie ETABLISSEMENT TABLE LNVT pour chaque processeur SP. Ces instructions de type IOH dont le format du contenu des registres adressés par R1 et R2 sera donné par la suite permettent le transfert de l'adresse de la table LNVT à chaque processeur SP.

Les instructions ETABLISSEMENT TABLE LNVT sont exécutées pour chaque processeur quand il est désiré procéder à un déplacement de la table. Les mots complets faisant quatre octets parmi lesquels trois sont utilisés comme indiqué ci-dessous:

```
 _____
!           !         !         !         !
!           ! octet X ! octet 0 ! octet 1 !
!_____!_____!_____!_____!
```

Il existe une instruction ETABLISSEMENT TABLE LNVT ADRESSE HAUTE qui permet d'établir l'octet X et une instruction ETABLISSEMENT TABLE LNVT ADRESSE BASSE qui permet de modifier les octets 0 et 1. Le contenu des différents octets sera donné ultérieurement.

En l'absence de l'exécution de ces instructions après chaque operation de chargement des programmes dans les processeurs SP, l'emplacement dit par défaut de l'adresse de la table LNVT est supposé fixé par exemple à la position X "880". La table est alors constituée de 512 mots dans le cas pris à titre d'exemple où le contrôleur gère 256 lignes bidirectionnelles au maximum.

L'instruction DEMARRAGE DE LIGNE INITIAL (SLI) est utilisée chaque fois que le programme de commande passe dynamiquement à une nouvelle zone parm/état, pour donner au processeur SP la nouvelle adresse de la zone parm/état. Ceci est accompli en plaçant la nouvelle adresse dans la table LNVT et en exécutant une instruction SLI. Le programme de commande utilise l'instruction SLI pour transférer l'adresse de l'interface et une commande au processeur SP gérant cet interface. Le processeur SP utilise l'adresse de l'interface pour calculer l'emplacement dans la table LNVT contenant la nouvelle adresse de la zone paramètre/état, transfère par vol de cycle cette adresse depuis la table LNV T et la sauve dans le bloc de commande d'interface ICB pour l'exécution des instructions suivantes DEMARRAGE DE LIGNE (SL). La suite du traitement associé à cette instruction SLI est identique à celui décrit ci-dessous pour l'instruction SL.

Dans les adaptateurs de lignes les processeurs SP ont une mémoire de commande dans laquelle des positions mémoires sont affectées à chaque interface suivant la même disposition que dans la mémoire 3, comme on peut le voir sur la figure 4. Pour chaque interface il est réservé une zone parm/état 43, associée à des positions 44 réservées au stockage des données proprement dites et à des blocs de contrôle d'interface ICB 45-T et 45-R.

Dans l'exécution d'une instruction DEMARRAGE DE LIGNE, les paramètres nécessaires à l'exécution des commandes des processeurs SP sont transmis dans leur mémoire par la zone parm/état 40. Le programme de commande résidant dans la mémoire 3 prépare des paramètres qui dépendent des types d'interface et du type de transmission sur l'interface (protocole et sens d'echange) puis initie le traitement dans les processeurs SP en exécutant une instruction SL ou SLI. Ces instructions fournissent l'adresse des interfaces et différentes commandes possibles aux processeurs SP. Pour l'instruction SL chaque processeur utilise l'adresse de l'interface pour localiser le bloc de commande SP ICB 45-T, ou 45-R. L'adresse de la zone parm/état extraite de ce bloc de commande est utilisée pour le transfert en vol de cycle des paramètres depuis les zones 40 dans les zones 43. L'exécution de la commande se poursuit suivant le type de commande.

L'instruction OBTENTION IDENTIFICATION DE LIGNE GET L ID est utilisée quand pour une raison telle que la fin normale d'une opération sur un interface, ou la détection d'une erreur, le programme de commande doit connaître quelles étaient les conditions de cette fin d'opération. Le processeur SP gérant l'interface accomplit ceci en transférant par vol de cycle, l'information d'état de la zone 43 à la zone état de 40 et en initiant une demande d'interruption à un niveau donne, par exemple, 2. La routine de service des interruptions de niveau 2 dans le CCU doit envoyer une instruction GET L ID aux processeurs. Il existe une mécanique de sélection automatique des adaptateurs décrite dans EP-A-0 011 701 qui permet à l'adaptateur ayant présenté la demande d'interruption précédente d'envoyer l'identification relative à cette interruption. Cette identification permet d'adresser la table LNVT pour retrouver l'adresse de la zone paramètre/état affectée à l'interface et d'analyser l'état correspondant à la fin de l'opération.

Pour les instructions d'entrée/sortie IOH et IOH I les formats des informations mises dans les registres définis par R1 et R2 ou dans le champ valeur immédiate sont les suivants:

Contenu Registre R1

```
 _____
!                                                 !
!     Source / Récepteur données                  !
!_____!
```

Contenu Registre R2 ou Champ I

```
 _____
!               !         !            !         !
! SELECT.   LAD ! CODE.OP ! 0   x   x  ! I/O     !
!_____!_____!_____!_____!
```

8

Les champs SELECT et LAD (adresse du LAB) sont utilisés comme champs d'adressage des adaptateurs.

CODE.OP est le code opération désignant une des opérations d'entrée/sortie définie précédemment:

. I/O = O signifie une opération de sortie (CCU → adaptateur).

. I/O = 1 signifie une opération d'entrée (adaptateur → CCU)

Deux bits xx sont sans signification, ils sont laissés en réserve et pourraient être utilisés dans un autre environnement.

Les formats des champs dans les registres définis par R1 et R2 pour les différentes instructions d'entrée/sortie vont maintenant être définis.

. Instructions: ETABLISSEMENT TABLE LNVT HAUTE (SET LNVT H)

ETABLISSEMENT TABLE LNVT BASSE (SET LNVT B)

SET LNVT H

| R1 | 0 0 0 0 0 0 0 0 | Octet X |
|---|---|---|

| R2 | SELECT LAD | 0 0 1 0 x x x 0 |
|---|---|---|

SET LNVT B

| R1 | Octet 0 | Octet 1 |
|---|---|---|

| R2 | SELECT LAD | 0 0 1 1 0 x x | 0 |
|---|---|---|---|

Ces instructions sont utilisées pour modifier l'octet X et les octets 0 et 1 indicateurs d'adresses ou pointeurs de la table LNVT.

. Instructions: DEMARRAGE DE LIGNE INITIAL SLI

9

| R1 | COMMANDE | 0 0 0 SPIA |
|---|---|---|

| R2 | SELECT LAD | 0 0 0 1 0 x x | 0 |
|---|---|---|---|

SPIA est l'adresse de l'interface de ligne.

Cette instruction est exécutée conformément à la procédure définie précédemment pour une opération de sortie IOH (CCU vers adaptateur).

Le contenu du registre R2 est envoyé sur le bus IO au temps TA par l'intermédiaire du registre D et stocké dans le registre 37 des adaptateurs. Les processeurs SP comparent les bits d'adresse SELECT LAD avec leurs adresses propres et celui qui se reconnaît envoie le signal d'accusé de réception VH.

Le contenu de R1 est ensuite transféré au temps TD à l'adaptateur sélectionné pour que le processeur SP puisse établir l'emplacement de la zone parm/état.

A chaque processeur SP pouvant être adressé par les bits SELECT et LAD de l'octet 0 du registrer R2, correspond une série de 32 entrées (une entrée par interface) dans la table LNVT. Une fois calculée l'adresse de sa série d'entrées, le processeur SP y ajoute l'octet 1 de R1 multiplé par 4 (puisque 4 octets sont réservés à chaque interface) pour trouver l'emplacement relatif à la SPIA de l'octet 1 du registre R1.

Le processeur SP déclenche une opération de vol de cycle conformément au processus décrit précédemment pour transférer deux mots complets de la table 42 à l'emplacement précédemment calculé dans les blocs ICB 45-T et 45-R affectés à la ligne. Ces deux mots constituent les pointeurs des zones parm/état associées à la ligne, une zone étant associée à l'interface émission T, et l'autre à l'interface réception R.

Si la ligne n'est pas bidirectionnelle seule la première zone sera utilisée pour les opérations d'émission et de réception.

Les adresses de zones 40-T et 40-R pour l'interface considére sont donc sauvées dans ces blocs ICB 45-T et 45-R et utilisées pour le transfert de la zone paramètre en vol de cycle dans la mémoire du processeur à l'emplacement 43 affecté à l'interface et ensuite la commande définie dans l'octet 0 de R1 est exécutée.

. Instruction: DEMARRAGE DE LIGNE (SL)

| R1 | COMMANDE | 0 0 0 SPIA |
|---|---|---|

| R2 | SELECT LAD | 0 0 0 0 | 0 x x | 0 |
|---|---|---|---|---|

Cette instruction est utilisée pour démarrer une opération sur une ligne et que l'emplacement de la zone parm/état a déjà été établie, par une précédente instruction DEMARRAGE DE LIGNE INITIAL (SLI).

L'octet 1 "000 SPIA" de R1 est utilisé par le processeur SP adressé pour localiser le bloc de commande ICB contenant le pointeur de la zone parm/état.

En utilisant ce pointeur, le processeur adressé transfère en vol de cycle la zone paramètre de la mémoire 3 dans sa mémoire 35 et exécute la commande.

. Instruction: OBTENTION IDENTIFICATION DE LIGNE: GET L ID

Cette instruction est du type IOHI

```
R1  !                IDENTIFICATION INTERFACE                !
    !_____!
```

```
I   !  0 0 1 1 0 0 0 0  !  0 0 0 0 0 x x  ! 1  !
    !_____!_____!____!
```

Cette instruction est envoyée à tous les processeurs SP lorsqu'une demande d'interruption au niveau 2 est servie.

Le mécanisme de sélection des processeurs SP assure que cette instruction est acceptée par le processeur SP ayant la demande de service la plus urgente.

Ce processeur répond avec l'information contenue dans la zone paramètre du mode d'initialisation qui donne l'identification de l'interface. Les interruptions de niveau 2 ne peuvent être servies avant qu'une opération de mode d'initialisation ait été exécutée.

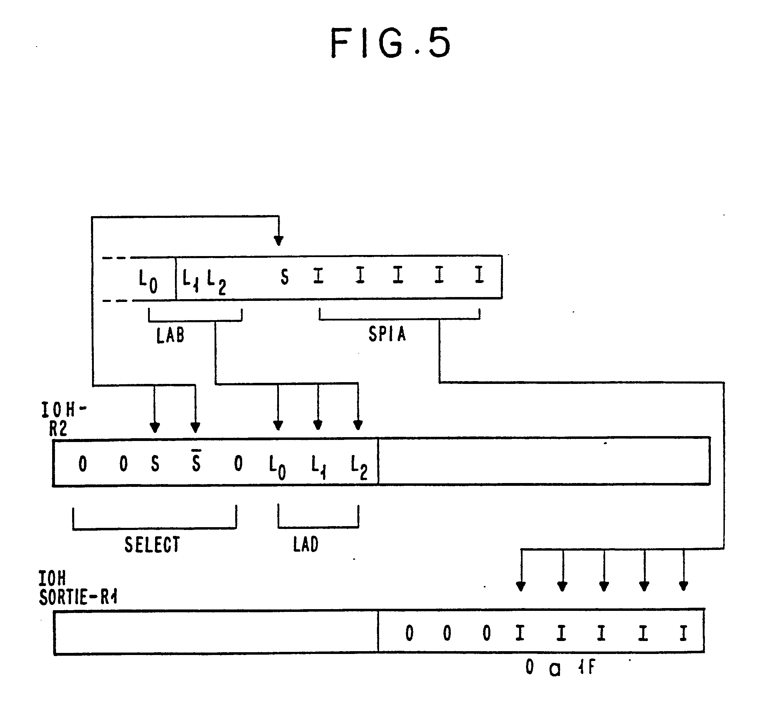

On va maintenant décrire comment sont générés les bits d'adresses en référence à la figure 5.

A chaque processeur SP est affectée une adresse sur le bus IO 5. Cette adresse comme on l'a vu précédemment est utilisée dans chacune des opérations d'entrée/sortie destinée à un processeur SP ou à un interface particulier de ce processeur. Chaque processeur SP doit aussi répondre à l'adresse générale qui est utilisée avec l'instruction GET L ID.

Vu du programme, dans un mode de réalisation préféré de l'invention, la faculté d'adresser 512 interfaces est offerte. Il est supposé que ces interfaces sont attachés à seize processeurs au maximum chacun pouvant gérer 32 interfaces. L'espace mémoire affecté à un processeur est constant et ne peut être utilisé par un autre processeur même si certains interfaces gérés par ce processeur ne sont pas utilisés.

L'adresse d'interface est une adresse à 9 bits de format suivant:

```
            0   1   2   3   4   5   6   7   8
          !_____!_____!
          !               !               !
          !      SPA      !     SPIA      !
          !_____!_____!
```

Le champ à quatre bits SPA détermine un des seize processeurs. Le champ à 5 bits SPIA identifie un interface particulier connecté au processeur défini par SPA.

Le champ SPA contenu dans l'adresse de l'interface n'est pas utilisable directement sur le bus IO, en réalité il est utilisé pour générer les champs SELECT et LAD. Les trois premiers bits du champ SPA constituent le champ LAD des instructions d'entrée/sortie, ce champ représente le panneau LAB.

Le bit 3 est utilisé pour déterminer les bits 2 et 3 du champ SELECT. Le bit 2 du champ SELECT est mis à la valeur du bit 3 du champ SPA, et le bit 3 du champ SELECT est mis à une valeur égale au complément de celle du bit 3 du champ SPA. Les bits 0-1 et 4 de ce champ sont mis à zéro de la façon suivante:

| SP | SPA | SELECT | LAD |
|----|------|--------|-----|
|    |      | 01234  | PAC |
| 0  | 0000 | 00010  | 000 |
| 1  | 0001 | 00100  | 000 |
| 2  | 0010 | 00010  | 001 |
| 3  | 0011 | 00100  | 001 |
| 4  | 0100 | 00010  | 010 |
| 5  | 0101 | 00100  | 010 |
| 6  | 0110 | 00010  | 011 |
| 7  | 0111 | 00100  | 011 |
| 8  | 1000 | 00010  | 100 |
| 9  | 1001 | 00100  | 100 |
| 10 | 1010 | 00010  | 101 |
| 11 | 1011 | 00100  | 101 |
| 12 | 1100 | 00010  | 110 |
| 13 | 1101 | 00100  | 110 |
| 14 | 1110 | 00010  | 111 |
| 15 | 1111 | 00100  | 111 |

14 1110 00010 111
15 1111 00100 111

L'adressage de l'interface de ligne ne réflète pas nécessairement l'attachement physique de la ligne en ce sens que chaque processeur peut être connecté à 64 interfaces et qu'un panneau LAB peut comporter un ou deux processeurs mais ne peut être connecté qu'à 64 interfaces.

Le schéma d'adressage des interfaces de lignes est independant de la configuration des panneaux et pour le programme de commande de réseau dans la mémoire CCU, il sera toujours supposé que chaque panneau LAB contient deux processeurs avec un maximum de 32 interfaces.

Le microcode contrôlant les processeurs SP et les circuits de ces processeurs tiennent compte de ce schéma d'adressage pour faire la relation entre l'adresse d'interface telle que définie précédemment et la configuration réelle du réseau.

La figure 5 montre l'etablissement par le programme de contrôle des champs LAD, SELECT et adresse d'interface dans les instructions IOH suivant l'adresse d'interfaces de lignes 0 à 511.

LOL1L2 représente les bits de l'adresse LAB qui donne le champ LAD, S est égal à 0 ou 1 pour représenter le premier ou second processeur sur le panneau LAB.

Les instructions d'entrée/sortie qui nécessitent une action par tous les processeurs SP mettent les bits 2 et 3 à 1 et le champ LAD à 0, les bits 0, 1 et 4 sont à 0 pour empêcher la sélection d'autres adaptateurs sur le BUS I/O.

```
     SELECT
     0   1   2   3   4        LAD
    ┌─────────────────────────────────┐
    !                                 !
    !  0   0   1   1   0      0  0  0  !
    !                                 !
    └─────────────────────────────────┘
```

Parmi les différentes commandes possibles, il y a des commandes particulières suivant les programmes de commande de réseau par exemple de type NCP ou EP.

NCP étant un programme natif du type de celui utilisé dans le contrôleur IBM 3705 et EP étant un programme d'émulateur du programme de commande du contrôleur IBM 270X permettant de contrôler un contrôleur IBM 3705.

Les principales commandes communes sont la commande MODE INITIALISATION, PREPARATION LIGNE, FIN D'ACTIVITE. Les commandes particulières suivant les différents programmes NCP ou EP permettent de réaliser les opérations de transmission et de réception des données et de commandes dans les différents protocoles de transmission.

La configuration de la zone Parm/état est spécifique à chaque commande. Cependant, les champs qui se retrouvent dans plusieurs commandes seront placés dans les mêmes octets.

La commande MODE INITIALISATION est utilisée pour personnaliser les interfaces de lignes. Ce doit être la première commande envoyée. Si une autre commande est reçue par un processeur SP, sans qu'une commande Mode Initialisation ait été exécutée, elle est rejetée, c'est-à-dire qu'une demande d'interruption de niveau 1 est faite.

On va donner ci-dessous, à titre d'exemple la configuration des zones paramètres et états utilisés avec la commande "MODE INITIALISATION".

PARAMETRE

```
!─────────────────────────────!─────────────────────────────!
!                             !                             !
!─────────────────────────────!─────────────────────────────!
!                             !                             !
!─────────────────────────────!                             !
!                             !                             !
!        COMPTE               !                             !
!                             !                             !
!─────────────────────────────!─────────────────────────────!
!                                                           !
!    ADRESSE DONNEES MODE  INITIALISATION                   !
!                                                           !
!───────────────────────────────────────────────────────────!
!    IDENTIFICATION LIGNE  -  LIGNE FDX INTERFACE T          !
!           LIGNE HDX INTERFACES  T et R                     !
!                                                           !
!───────────────────────────────────────────────────────────!
!    IDENTIFICATION INTERFACE R LIGNE FDX                    !
!                                                           !
!─────────────────────────────!─────────────────────────────!
!                             !                             !
!                             !                             !
!─────────────────────────────!─────────────────────────────!
!                             !                             !
!                             !                             !
!─────────────────────────────!─────────────────────────────!
```

FDX = Bi-directionnelle > >DX = Semi-directionnelle

ETAT - MODE NORMAL NCP et EP

```
!─────────────────────────────!─────────────────────────────!
!                             !                             !
!          SCF                !     CMD:  X "01" X           !
!                             !                             !
!─────────────────────────────!─────────────────────────────!
!                             !                             !
!        X "00"               !         LCS                 !
!                             !                             !
!─────────────────────────────!─────────────────────────────!
!                             !                             !
!          00                 !          00                 !
!                             !                             !
!─────────────────────────────!─────────────────────────────!
!                             !                             !
!     MODEM ENTREE            !      MODEM SORTIE            !
!                             !                             !
!─────────────────────────────!─────────────────────────────!
!                             !                             !
!                             !                             !
!─────────────────────────────!─────────────────────────────!
!                             !                             !
!                             !                             !
!─────────────────────────────!─────────────────────────────!
```

COMPTE, ce multiplet détermine le nombre de caractères de données qui doivent être transférés dans la zone données associée à la zone paramètre.

La zone état commence avec un octet SCF qui contient l'information décrivant le déroulement de l'opération exécutée.

CMD "01" indique qu'il s'agit d'une commande MODE INITIALISATION.

LCS contient l'état de la communication sur la ligne servie. Il contient deux types d'information: Etat Initial e Etat Final.

```
0   1   2   3   4   5   6   7
!_____!___!_____!___!___!
   Etat Initial   !_____, Etat final
```

Les états Initial et Final contiennent trois types d'information, état initial ligne BSC NCP (réceptio uniquement), état spécial (tout protocole de ligne), erreur due aux circuits (tout procole de ligne).

```
Etat Initial
     Bits      0 1 2
               0 0 0    Mode commande pas de texte reçu
               0 0 1    Mode texte
               0 1 0    Mode texte transparent
               1 0 0    Etat spécial
               1 1 0    Erreur interne
               1 1 1    Erreur due aux circuits
```

Les configurations des champs SCF et LCS dans le mode d'initialisation ont la signification indiquée dans le tableau ci-dessous:

```
SCF         LCS
01000100    00000000    Mode initialisation terminé
                        NCP et EP
00000000    11010010    Commande rejetée
00000000    110XXXX0    Erreur interne
               !__!
              '—Etat final
```

Dans le cas d'une erreur interne les bits 3-4-5 et 6 de l'état final du LCS ont la signification suivante:

```
Bits 3456
     0000    Erreur dans l'opération de vol de cycle
     0001    Erreur interface dispositif de balayage
     0010    Erreur interface SP
     0011    Dispositif de balayage ne répond pas
     0100    Dispositif de balayage erreur interne
     1001    Commande rejetée
```

MODEM-ENTREE et MODEM-SORTIE représentent les configurations des signaux sur les fils de contrôle associés aux interfaces réception et émission, constituant ensemble les interfaces d'entrée et de sortie au modem connectant le terminal à une ligne de communication.

Les données du mode initialisation comprennent:

1. Des informations concernant le protocole de transmission et la procédure de commande de liaison.
2. Des information concernant les zones de mémoire contenant les données dans l'unité CCU.
3. Des informations de vérification d'adresse.
4. Des informations de temps.

La commande MODE INITIALISATION est destinée à un seul des interfaces, puisque les deux interfaces d'une même ligne correspondent à un même mode de transmission. Elle est donc dans un mode de réalisation préféré envoyé à l'interface émission et elle sera rejetée si elle est par erreur envoyée à l'autre interface.

Les commandes MODE INITIALISATION sont donc envoyées successivement par l'opération de sortie SLI ou SL pour caractériser toutes les lignes, quel que soit le protocole et le mode de transmission sur ces lignes. Cette opération est réalisée à la mise en place du réseau de lignes attachées au contrôleur, et une opération de commande "MODE INITIALISATION" doit être réalisée chaque fois que dans un réseau déjà installé on remplace une ligne par une autre, fonctionnant dans un mode différent.

Les données qui sont envoyées pendant le mode initialisation sont les suivantes:

| | SDLC | NCP BSC | EP BSC | S/S |
|---|---|---|---|---|
| Octets 0—1 — Réservés | x | x | x | x |

Octet 2 — Caractéristique Ligne

**NCP**

| | | SDLC | NCP BSC | EP BSC | S/S |
|---|---|---|---|---|---|
| Bit 0 | Ligne FDX | x | | | |
| 1 | 230 Kbps | x | | | |
| 2 | 0 (NCP) | | | | |
| 3 | transmettre deux fanions | x | | | |
| 4 | (pas utilisé) | | | | |
| 5 | (pas utilisé) | | | | |
| 6 | transmettre fanions entre trames | x | | | |
| 7 | Primaire = 1 Secondaire = 0 | x | | | |

**EP**

| | | SDLC | NCP BSC | EP BSC | S/S |
|---|---|---|---|---|---|
| Bit 0 | | | | | |
| 1 | | | | | |
| 2 | 1 (EP mode) | | | x | x |
| 3 | Mode interruption | | | x | x |
| 4 | ITB = données | | | x | |
| 5 | EIB mode | | | x | |
| 6 | Modem Option 1 | | | x | x |
| 7 | Mode 2703 | | | x | x |

Octet 3
**NCP**

| | | SDLC | NCP BSC | EP BSC | S/S |
|---|---|---|---|---|---|
| Bit 0 | Génère tonalité réponse | x | x | | x |
| 1 | Ligne commutée | x | x | | x |
| 2 | Mode indicateur sonnerie | x | x | | x |
| 3 | NRZI (SDLC) ou ligne garantie (S/S) | x | | | x |
| 4 | Retournement avec RTS actif (facilité FDX) | x | x | | x |
| 5 | Transmission avec nouvelle synchron. | x | x | | |

**EP**

| | | SDLC | NCP BSC | EP BSC | S/S |
|---|---|---|---|---|---|
| Bit 0 | TWX (connexion à un terminal télétype loué) | | | | x |
| 1 | Ligne commutée | | | x | x |
| 2 | Mode indicateur sonnerie | | | x | x |
| | | | | x | x |
| 3 | Ligne garantie | | | | x |
| 4 | Retournement avec RTS actif | | | x | x |
| 5 | Transmission avec nouvelle synchron. | | | x | |
| 6 | Mauvais PAD (caractère remplissage) ignoré | | | x | |
| 7 | Caractère STX est inclus dans BCC | | | x | |

| | SDLC | NCP BSC | EP BSC | S/S |
|---|---|---|---|---|
| Octet 4 | | | | |
| Bits 0—3 (champ LCD) | | | | |
| Hexadécimal 0 SS 9/6 | | | | x |
| 1 Réservé | | | | |
| 2 SS 8/5 | | | | x |
| 3 Appel automatique | x | x | x | |
| 4 SS 9/7 | | | | x |
| 5 SS 10/7 | | | | x |
| 6 SS 10/8 | | | | x |
| 7 SS 11/8 | | | | x |
| 8 Réserve | | | | |
| 9 SDLC | x | | | x |
| A Réservé | | | | |
| B Réservé | | | | |
| C BSC EBCDIC | | x | x | |
| D BSC ASCII | | x | x | |
| E BSC ASCII transparent (EP) | | | x | |
| F Réservé | | | | |
| 4—7 NCP/EP dimension préfixe zone mémoire données CCU | x | x | x | x |
| Octet 5      Vitesse de ligne et Horloge | | | | |
| Si ligne synchrone: | | | | |
| Bit 0 = 1 | x | x | x | x |
| 1—4 vitesse de ligne si horloge interne | x | x | x | x |
| 0001   50   Bps | | | | |
| 0010   150   " | | | | |
| 0100   135,5' " | | | | |
| 0111   200   " | | | | |
| 1000   300   " | | | | |
| 1011   600   " | | | | |
| 1101 1200   " | | | | |
| 1110   Spécial | | | | |
| 5 Horloge externe | x | x | x | x |
| 6 Sélection vitesse données | x | x | x | x |
| 7 Terminal attaché directement sans modem | x | x | x | x |
| Si ligne asynchrone S/S | | | | |
| Bit 0 = 0 | | | | x |

**0 089 440**

|  |  | SDLC | NCP BSC | EP BSC | S/S |
|---|---|---|---|---|---|
| 1—4 | vitesse de ligne si horloge interne<br>0000  50  Bps<br>0011  110  "<br>0101  134,5' "<br>0110  200  "<br>1001  300  "<br>1010  600  "<br>1100 1200  "<br>i i i i  Spécial |  |  |  | x |
| 5 | Horloge externe |  |  |  | x |
| 6 | Sélection vitesse données |  |  |  | x |
| 7 | Terminal attaché directement sans modem |  |  |  | x |
| Octet 6 NCP/EP | dimension zone mémoire donnée | x | x | x | x |

Les multiplets suivants ne sont utilisés que par le programme NCP

| Octet 7 |  |  |  |  |  |
|---|---|---|---|---|---|
| Bits 6—7 | Longueur totale des champs A et C lorsqu'il s'agit d'une station secondaire | x |  |  |  |
| Octets 8—9 | Adresse station secondaire SDLC | x |  |  |  |

La signification de certains des champs va être précisée ci-dessous:

NCP Octet 2 - Bit 6 "Transmettre fanions entre trames" en mode SDLC lorsque ce bit est actif et que le modificateur retournement de ligne (en HDX on passe de émission sur réception) est inactif, dans la commande émission en SDLC, des fanions sont envoyés après la trame.

Si ce bit est inactif des caractères héxadécimaux FF sont émis.

Bit 7 "Primaire/secondaire"

Station primaire, pour une ligne SDLC, ceci indique que le processeur SP est une station primaire sur la ligne.

Si ce bit est à 0 le processeur SP est une station secondaire.

NCP/EP Octet 4 - Bits 4-7

Détermine la dimension de la zone préfixe d'une zone mémoire affectée au stockage des données dans le CCU. L'information contenue dans ce préfixe est l'indicateur de la zone mémoire suivante dans la chaîne, le déplacement relatif au début des données et le compte de données.

Les abréviations utilisées, BSC, SDLC, S/S, RTS, NRZI, ITB, EIB sont les abréviations courantes normalisées pour les différents protocoles de transmission.

Le traitement d'une commande MODE INITIALISATION par le processeur adressé comprend les étapes suivantes:

1. Obtenir des paramètres relatifs à l'interface depuis la mémoire CCU zone 40 dans la zone 43 de la mémoire du processeur SP.

2. Sauver l'identification de l'interface (HDX) ou des interface (FDX) dans le bloc ICB correspondant.

3. Obtenir les données du mode initialisation du CCU.

4. Sauver ces données dans la zone mémoire 46 du processeur SP, affectée à l'interface.

5. Transférer les paramètres depuis la zone 46 au dispositif de balayage S.

6. Construire l'information d'état et la transférer dans la partie état de la zone 46.

7. Faire une demande d'interruption au niveau 2.

Une fois le réseau personnalisé, les opérations de transfert de messages entre les terminaux et l'unité de traitement central se font par des commandes: PREPARATION LIGNE, EMISSION ou RECEPTION et FIN D'ACTIVITE qui sont des commandes classiques dans les réseaux.

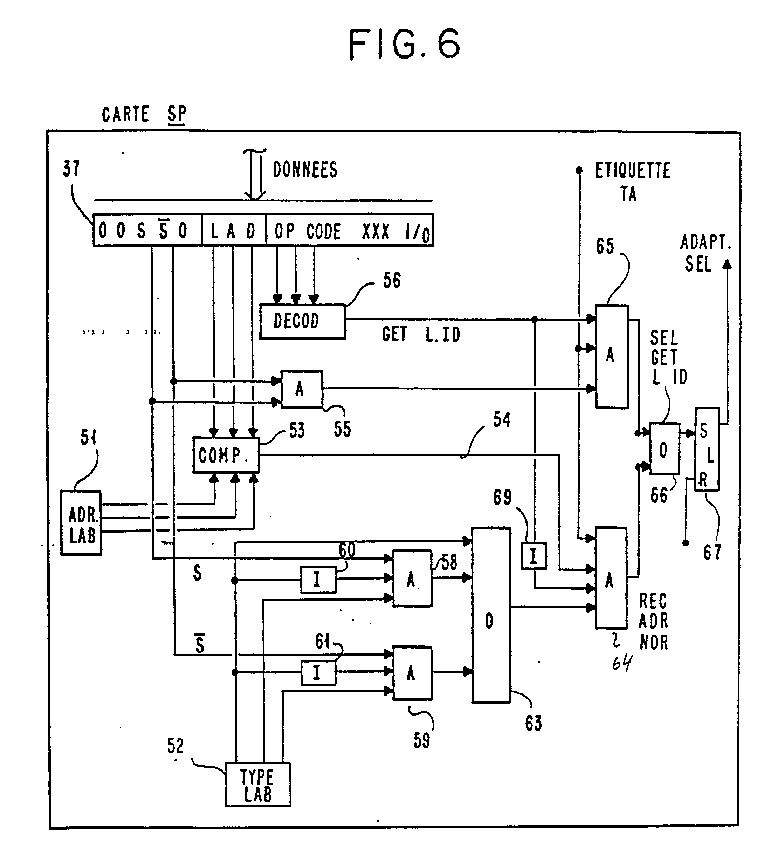

Sur la figure 6 est représenté le circuit de décodage d'adresses.

Pour l'exécution d'une opération type IOH conformément à la procédure décrite précédemment, au temps TA le contenu du registre défini par R2 est transféré par l'interface IOC sur le bus IO 5 et il est reçu dans le registre 37 de tous les processeurs SP.

Les informations d'adresses sont câblées sur chaque carte comportant un processeur SP, des panneaux LAB. Le circuit 51 qui comprend des commutateurs, fournit sur ces trois sorties l'adresse câblée du panneau LAB. Le circuit 52 fournit l'indication du type de LAB par exemple:

1 processeur/LAB 100

2 processeurs/LAB 001 Interface 0 à 31, 16 lignes

010 Interface 32 à 63, 16 lignes

Par exemple dans le cas du panneau LAB-3, la première carte comportant le processeur SP1 et la deuxième carte comportant le processeur SP2, ont les adresses câblées 001 et 010 respectivement qui sont fournies par les circuits 52 de ces cartes.

Un comparateur 53 effectue la comparaison de l'adresse câblée LAB fournie par 51 avec le champ LAD dans le registre 37 et il délivre sur sa sortie 54 un signal de niveau haut quand ces deux configurations de bits coincident.

Un circuit ET 55 reçoit en entrées les bits S et Š du champ SELECT et fournit un signal de sortie de niveau haut uniquement lorsqu'une opération OBTENTION IDENTIFICATION LIGNE est à exécuter car dans ce cas les deux bits S et Š sont mis à 1.

Le circuit de décodage 56 reçoit le code opération et reconnaît la configuration de l'opération OBTENTION IDENTIFICATION LIGNE pour fournir en sortie un signal de niveau haut, lorsque ce code opération est décodé c'est-à-dire que tous les adaptateurs doivent être sélectionnés.

Le circuit logique comprenant les portes ET 58 et 59, le circuit OU 63, produit à la sortie du circuit 63 un signal de niveau haut lorsque la configuration de bits S et Š correspond à l'adresse câblée fournie par le circuit 52.

Par exemple si l'adresse câblée à la sortie de 52 est 001, signifiant qu'il s'sgit d'un LAB avec deux processeur, la porte ET 59 qui reçoit un bit 1 de l'inverseur 61 et fournit un signal de niveau 1 au circuit OU 63, S et Š sont respectivement 01.

Dans le cas où l'adresse câblée fournie par 52 est 010, le circuit ET 58 fournira un signal de niveau 1 si S et Š sont 10 respectivement.

Dans le cas où l'adresse câblée est 100 signifiant qu'il s'agit d'un LAB avec un processeur, le circuit OU 63 est directement conditionné.

La sortie du circuit OU 63 est amenée au circuit ET 64 avec la sortie 54 du comparateur et la sortie inversée par 69 du décodeur 56 et l'étiquette TA. En conséquence, le circuit ET 64 fournira un signal de niveau 1, si l'adresse LAB a été reconnue, au temps TA, que l'opération n'est pas une opération OBTENTION IDENTIFICATION LIGNE. Il fournit le signal de reconnaissance d'adresse normal REC. ADR. NOR.

La porte ET 65 reçoit la sortie du circuit ET 55, la sortie du décodeur 56 et l'étiquette TA pour fournir un signal de sélection SEL GET L ID. Pour que l'adaptateur puisse répondre et éventuellement envoyer l'identification d'identification. d'interface conformément à la procédure décrite précédemment.

Les sorties des circuits ET 64 et 65 sont amenées au circuit OU 66 lui-même connecté à une bascule 67 qui fournit le signal de sélection ADAPT. SEL.

**Revendications**

1. Procédé d'échange d'information dans un contrôleur de communications du type comportant une unité de commande centrale (CCU) associée à une mémoire (3) dans laquelle une partie est réservée au stockage d'un programme de commande de réseau, ladite unité de commande centrale étant connectée par un interface d'entrée/sortie (IOC) à un bus d'entrée/sortie (IO-5) sur lequel sont attachés d'une part des adaptateurs de lignes de communications (SP, S) comprenant un microprocesseur (SP) et une mémoire (35) et d'autre part au moins

**0 089 440**

une unité de traitement central (CPU), l'unité de commande centrale pouvant communiquer avec les adaptateurs par des opérations de transfert en vol de cycle (AIO) et des opérations d'entrée/sortie (PIO), caractérisé en ce qu'il comprend:

à l'initialisation:

l'établissement dans la mémoire de l'unité de commande, d'une table de correspondance (42) à partir d'une adresse de départ déterminée, cette table comportant une première et une seconde positions d'adresse par ligne de communications dans chacune desquelles est stockée l'adresse de l'emplacement d'une zone (40) de la mémoire (3) réservée au stockage d'informations de contrôle (paramètre/état) correspondant à l'interface émission et à l'interface réception de chaque ligne de communication,

le transfert par une première série d'opérations d'entrée/ sortie (PIO) de type sortie de l'adresse de départ, à chacun des adaptateurs,

pour une première communication:

pour chaque ligne, l'envoi par l'unité de commande centrale, par une opération d'entrée/sortie (PIO) de type sortie de démarrage de ligne initial (SLI) d'un premier code (SELECT LAD) spécifiant l'adresse d'un adaptateur à sélectionner,

l'envoi d'un signal d'accusé de réception par l'adaptateur qui a reconnu son adresse et la mémorisation du premier code dans l'adaptateur,

l'envoi par l'unité de commande centrale d'un second code spécifiant l'adresse de l'interface sélectionné d'une ligne sélectionnée (SPIA) et d'une commande d'initialisation destinée à l'interface sélectionné;

le calcul par le microprocessuer de l'adaptateur des adresses dans la table correspondant aux interfaces de la ligne sélectionnée en fonction des premier et second codes et de l'adresse de départ de la table de correspondance et le transfert par vol de cycle des informations contenues à ces adresses dans des blocs de contrôle associés aux emplacements de la mémoire du microprocesseur affectés aux interfaces de ladite ligne,

l'échange par vol de cycle entre l'unité de commande centrale et l'adaptateur des informations de la zone paramètre affectée à l'interface sélectionné et de données correspondantes;

pour un mode d'échange normal:

l'envoi par l'unité de commande centrale par une opération d'entrée/sortie de type sortie de démarrage de ligne (SL), du premier code spécifiant l'adresse d'un adaptateur à sélectionner,

l'envoi d'un signal d'accusé de réception par l'adaptateur qui a reconnu son adresse,

l'envoi du second code spécifiant l'adresse de l'interface sélectionné d'une ligne que l'adaptateur sélectionné utilise pour localiser le bloc de contrôle contenant l'adresse de la zone paramètre/état affectée à l'interface, et d'une commande de transfert de message destinée à l'interface,

l'échange par vol de cycle des informations de la zone paramètre située à l'adresse contenue dans le bloc de contrôle ainsi localisé, de la mémoire de l'unité de commande centrale à la zone paramètre de la mémoire du microprocesseur affectée à l'interface.

2. Procédé selon la revendication 1, caractérisé en ce que la zone paramètre affectée de chaque interface comprend l'identification de l'interface.

3. Procédé selon la revendication 2 caractérisé en ce qu'il comprend:

l'envoi à tous les adaptateurs par une opération d'entrée/sortie (PIO) de type sortie d'obtention d'identification de ligne lorsqu'une fin d'opération sur un interface a lieu, d'un troisième code reconnu par tous les adaptateurs et

l'envoi par l'adaptateur dans lequel la demande de service est la plus urgente de l'adresse de l'interface contenue dans la zone paramètre et

le transfert en vol de cycle de l'information d'état d'une zone état dans la mémoire du microprocesseur affectée à l'interface dans la zone état de la mémoire de l'unité de commande affectée à l'interface.

4. Procédé selon l'un quelconque des revendications précédentes caractérisé en ce que la table de correspondance (LNVT) comporte un nombre de positions égal au nombre maximum 2n d'interfaces pouvant être gérés par le contrôleur et le nombre des zones d'information de contrôle (paramètre/état) réservées dans la mémoire de l'unité de commande centrale est égal au nombre maximum 2n d'interfaces, chaque zone étant associée à une chaîne de positions mémoire affectées au stockage des données à échanger par l'interface correspondant.

5. Procédé selon l'une quelconque des revendications précédentes, caractérisé en ce que la commande d'initialisation provoque le transfert dans la zone paramètre de la mémoire du microprocesseur de paramètres d'initialisation et de données d'initialisation associées qui caractérisent le type d'interface.

6. Procédé selon l'une quelconque des revendications précédentes caractérisé en ce que le premier code spécifiant l'adresse de l'adaptateur comprend:

un premier champ (LAD) ayant une nombre de bits permettant de compter jusqu'à n/k en binaire, 2k étant le nombre maximum d'interfaces pouvant être connectés à un panneau comportant un ou deux adaptateurs, le premier panneau connecté au bus d'entrée/sortie ayant une premier champ (LAD) zéro partout et le dernier panneau connecté au bus ayant un premier champ (LAD) un partout,

un second champ (SELECT) dans lequel un premier bit est mis à une première valeur binaire et un second bit est mis à une seconde valeur binaire pour l'adressage des k/2 premiers interfaces et le premier bit est mis à la seconde valeur binaire et le second bit à la première valeur binaire pour l'adressage des k/2 interfaces suivants.

7. Procédé selon la revendication 6 caractérisé en ce que le troisième code pour être reconnu par tous les adaptateurs comporte un premier champ (LAD) zéro partout et un second champ (SELECT) dans lequel les

19

premier et second bits sont mis à la même valeur binaire.

8. Dispositif pour mettre en oeuvre le procédé selon la revendication 6 caractérisé en ce que chaque adaptateur comprend des moyens pour générer un signal de reconnaissance d'adresse comportant:

un premier circuit (51) fournissant en sortie une première configuration de bits représentant le numéro du panneau sur lequel se trouve l'adaptateur,

un second circuit (52) fournissant en sortie une seconde configuration de bits représentant le type de panneau,

des moyens de comparaison (53) comparant le premier champ (LAD) sur le bus entrée/sortie avec la première configuration de bits fournissant sur sa sortie un signal indicatif de la coïncidence dudit premier champ et de la première configuration,

un troisième circuit (58, 59, 63, 64) fournissant sur sa sortie le signal de reconnaissance d'adresse lorsque les premier et second bits du second champ (SELECT) sur le bus entrée/sortie correspondent au type de panneau.

9. Dispositif selon la revendication 7 caractérisé en ce que chaque adaptateur comprend des moyens pour générer un signal de sélection d'adaptateur comportant:

un premier circuit (51) fournissant en sortie une première configuration de bits représentant le numéro du panneau sur lequel se trouve l'adaptateur,

un second citcuit (52) fournissant en sortie une seconde configuration de bits représentant le type de panneau,

des moyens de comparaison (53) comportant le premier champ (LAD) sur le bus entrée/sortie avec la première configuration de bits fournissant sur sa sortie un signal indicatif de la coïncidence dudit premier champ et de la première configuration,

un troisième circuit (58, 59, 63, 64) fournissant sur sa sortie un signal de reconnaissance d'adresse lorsque les premier et second bits du second champ (SELECT) sur le bus entrée/sortie correspondent au type de panneau,

un quatrième circuit (56, 65) fournissant sur sa sortie un signal de sélection, lorsque le troisième code est reconnu et que les deuxième et troisième bits sont à la même valeur binaire,

un cinquième circuit (66, 67) recevant le signal de reconnaissance et le signal de sélection et générant le signal de sélection d'adaptateur lorsque l'un ou l'autre de ces signaux est présent.


**Patentansprüche**

1. Verfahren zum Austausch von Informationen in einer Datenaustauschsteuerung vom Typ, der eine zentrale Steuereinheit (CCU) in Verbindung mit einem Speicher (3) umfasst, in dem ein Teil zum Einlesen eines Netzsteuerprogramms reserviert ist, wobei die genannte zentrale Steuereinheit über eine Eingabe/Ausgabe-Schnittstelle (IOC) mit einem Eingabe-/Ausgabe-Datenbus (IO-5) verbunden ist, an dem einerseits die einen Mikroprozessor (SP) und einen Speicher (35) beinhaltenden Verbindungslinienadapter (SP, S) und anderseits zumindest eine zentrale Datenverarbeitungseinheit (CPU) angeschlossen sind, wobei die zentrale Steuereinheit über Übertragungsoperationen mit Zyklusstehlen (AIO) und Eingabe/Ausgabeoperationen (PIO) mit den Adaptern verkehren kann, dadurch gekennzeichnet, dass es folgende Schritte umfasst

bei der Initialisierung:

im Speicher der Steuereinheit, Erstellen einer Verbindungstabelle (42) auf der Basis einer bestimmten Anfangsadresse, wobei diese Tabelle eine erste und eine zweite Adressenposition pro Austauschlinie umfasst, in der jeweils die Ortsadresse einer Zone (40) des Speichers (3) abgelegt ist, die für das Abspeichern von Kontrollinformationen (Parameter /Zustand) reserviert ist, die der Ausgabe- und der Empfangs-Schnittstelle jeder Austauschlinie entsprechen,

Übergabe einer ersten Serie von Eingabe/Ausgabeoperationen (PIO) des Typs Ausgabe der Anfangsadresse an jeden der Adapter;

beim ersten Austausch:

für jede Linie, von der zentralen Steuereinheit, Auslösen einer Eingabe/Ausgabeoperation (PIO) des Typs Ausgabe zum Anstoss der Anfangslinie (SLI) eines ersten Codes (SELECT LAD), in dem die Adresse des anzuwählenden Adapters angegeben ist,

vom Adapter, der seine Adresse erkannt hat, Ausgabe eines Empfangsbestätigungssignals und Abspeichern des ersten Codes im Adapter,

von der zentralen Steuereinheit, Ausgabe eines zweiten Codes, in dem die Adresse der gewählten Schnittstelle einer gewählten Linie (SPIA) angegeben wird, und eines Initialisierungsbefehls für die gewählte Schnittstelle;

durch den Mikroprozessor des Adapters, Berechnung der Adressen in der Tabelle, die den Schnittstellen der im Hinblick auf den ersten und den zweiten Code gewählten Linie entsprechen, und der Anfangsadresse der Verbindungstabelle sowie, durch Zyklusstehlen, Übergabe der darin enthaltenen Informationen an diese Adressen in Steuerblöcken, die zu den Speicherplätzen des Mikroprozessors gehören, wobei diese Speicherplätze den Schnittstellen der genannten Linie zugeordnet sind,

Austausch, durch Zyklusstehlen, von Informationen aus der der gewählten Schnittstelle zugeordneten Parameterzone und der entsprechenden Daten zwischen der zentralen Steuereinheit und dem Adapter;

bei laufendem, normalen Datenaustausch:

Durch die zentrale Steuereinheit, Auslösen einer Eingabe/Ausgabeoperation des Typs Ausgabe zum Anstoss der Linie (SL) des ersten Codes, in dem die Adresse eines anzuwählenden Adapters angegeben ist,

vom Adapter, der seine Adresse erkannt hat, Ausgabe eines Empfangsbestätigungssignals,

Ausgabe des zweiten Codes mit der Adresse der gewählten Schnittstelle einer Linie, die der gewählte Adapter benutzt, um den Steuerblock zu lokalisieren, der die Adresse der der Schnittstelle zugeordneten Parameter/Zustands-Zone beinhaltet, und eines Übermittlungsbefehls für die Meldung, die für die Schnittstelle bestimmt ist,

zwischen dem Speicher der zentralen Steuereinheit und der Parameterzone des Mikroprozessorspeichers, der der Schnittstelle zugeordnet ist, durch Zyklusstehlen Austausch von Informationen aus der der gewählten Schnittstelle zugeordneten Parameterzone, die sich im derart lokalisierten Steuerblock befindet.

2. Verfahren nach Anspruch 1, dadurch gekennzeichnet, dass die jeder Schnittstelle zugeordnete Parameterzone die Identifizierung dieser Schnittstelle beinhaltet.

3. Verfahren nach Anspruch 2, dadurch gekennzeichnet, dass es folgendes umfasst:

Übermittlung eines von allen Adaptern erkannten dritten Codes an alle diese, und zwar durch eine Eingabe/Ausgabeoperation (PIO) des Typs Ausgang zur Identifizierung der Linie, wenn das Ende eines Verfahrens auf einer Schnittstelle stattfindet und

Übermittlung der in der Parameterzone enthaltenen Schnittstellenadresse durch den Adapter, in welchem der Bedienungsbedarf am dringendsten ist, und

durch Zyklusstehlen, Übertragung der Statusinfonmation einer Statuszone in den Speicher des Mikroprozessors, der der Schnittstelle in der Statuszone des Speichers der Steuereinheit zugeordnet ist, zu der die Schnittstelle gehört.

4. Verfahren nach einem beliebigen der vorgehenden Ansprüche, dadurch gekennzeichnet, dass die Verbindungstabelle (LNVT) eine Anzahl von Positinen umfasst, die der maximalen Anzahl 2n von Schnittstellen gleich ist, die von der Kontrolleinheit gesteuert werden können und dass die Anzahl der Kontroll-Informationszonen (Parameter / Status), die im Speicher der zentralen Steuerelnheit reserviert sind, der maximalen Anzahl 2n der Schnittstellen gleich ist, wobei jede Zone einer Reihe von Speicherpositionen zugeordnet ist, die zum Abspeichern der auszutauschenden Daten durch die entprechende Schnittstellen vorgesehen sind.

5. Verfahren nach einem beliebigen der vorgehenden Ansprüche, dadurch gekennzeichnet, dass die Initialisierungssteuerung die Ubergabe von Initialisierungsparametern und dazugehörigen Initialisierungsdaten, die den Typ der Schnittstelle kennzeichnen, in die Parameterzone des Mikroprozessorenspeichers bewirkt.

6. Verfahren nach einem beliebigen der vorgehenden Ansprüche, dadurch gekennzeichnet, dass der erste Code, der die Adresse des Adapters angibt, weiterhin umfasst:

ein erstes Feld (LAD) mit einer Bit-Anzahl, die es ermöglicht, binär bis n/k zu zählen, wobei 2k die maximale Anzahl der Schnittstellen ist, die mit einer ein oder zwei Adapter tragenden Tafel verbunden werden können, und die erste mit dem Eingabe/Ausgabe-Datenbus verbundene Tafel überall ein erstes Feld (LAD) Null und die letzte mit dem Datenbus verbundene Tafel überall ein erstes Feld (LAD) Eins aufweist,

ein zweites Feld (SELECT), in welchem ein erstes Bit auf einen ersten binären Wert und ein zweites Bit auf einen zwelten binären Wert gebracht werden, um die ersten k/2 Schnittstellen zu adressieren und das erste Bit auf den zweiten binären Wert sowie das zweite Bit auf den ersten binären Wert gebracht werden, um die folgenden k/2 Schnittstellen zu adressieren.

7. Verfahren nach Anspruch 6, dadurch gekennzeichnet, dass der dritte Code, um von allen Adaptern erkannt zu werden, ein erstes Feld (LAD) mit überall Null beinhaltet und ein zweites Feld (SELECT), in dem das erste und das zweite Bit denselben binären Wert haben:

8. Vorrichtung, um das Verfahren nach Anspruch 6 in Betrieb zu nehmen, dadurch gekennzeichnet, dass jeder Adapter Mittel umfasst, um ein Adressenerkennungssignal zu generieren, zu denen folgendes gehört:

ein erster Schaltkreis (51), der als Ausgang eine erste Bit-Konfiguration erstellt, die der Nummer der Tafel entspricht, auf der sich der Adapter befindet,

ein zweiter Schaltkreis (52), der als Ausgang eine zweite Bit-Konfiguration erstellt, die dem Typ der Tafel entspricht,

Vergleichsmittel (53), um das erste Feld (LAD) auf dem Eingabe/Ausgabe-Datenbus mit der ersten Bit-Konfiguration zu vergleichen, die als Ausgang ein Signal liefert, mit dem die Übereinstimmung zwischen dem genannten ersten Feld und der ersten Konfiguration angezeigt wird,

ein dritter Schaltkreis (58, 59, 63, 64), der als Ausgang das Signal zum Erkennen der Adresse erstellt, wenn das erste und das zweite Bit des zweiten Feldes (SELECT) auf dem Eingabe/Ausgabe-Datenbus dem Typ der Tafel entsprechen.

9. Vorrichtung nach Anspruch 7, dadurch gekennzeichnet, dass jeder Adapter Mittel zum Generieren eines Adapterwahlsignals umfasst, zu denen folgendes gehört:

ein erster Schaltkreis (51), der als Ausgang eine erste Bit-Konfiguration erstellt, die der Nummer der Tafel entspricht, auf der sich der Adapter befindet,

ein zweiter Schaltkreis (52), der als Ausgang eine zweite Bit-Konfiguration erstellt, die dem Typ der Tafel entspricht,

Vergleichsmittel (53), um das erste Feld (LAD) auf dem Eingabe/Ausgabe-Datenbus mlt der ersten Bit-Konfiguration zu verglelchen, die als Ausgang ein Signal liefert, mit dem die Übereinstimmung zwischen dem genannten ersten Feld und der ersten Konfiguration angezeigt wird,

ein dritter Schaltkreis (58, 59, 63, 64), der als Ausgang das Signal zum Erkennen der Adresse erstellt, wenn das erste und das zweite Bit des zweiten Feldes (SELECT) auf dem Eingabe/Ausgabe-Datenbus dem Typ der Tafel entsprechen,

ein vierter Schaltkreis (56, 65), der als Ausgang ein Wahlsignal erstellt, wenn der dritte Code erkannt wird und wenn das zweite und das dritte Bit denselben binären Wert anzeigen,

ein fünfter Schaltkreis (66, 67), der das Erkennungs- und das Wahlsignal empfängt und das Adapterwahlsignal erstellt, wenn das eine oder das andere dieser Signale ansteht.

## Claims

1. In a communications controller of the type comprising a central control unit (CCU) associated with a storage (3), part of which is used for storing a network control program, said central control unit being connected through an input/output interface (IOC) to an input/output bus (IO-5) to which are attached, on the one hand, communication line adapters (SP, S) including a microprocessor (SP) and a storage (35), and, on the other hand, at least one central processing unit (CPU), with the central control unit communicating with the adapters by means of cycle steal transfer operations (AIO) and input/output operations (PIO), a method of exchanging information, characterized in that it includes the steps of:

during initialization:

setting up in the storage of the control unit a correspondence table (42) from a predetermined starting address, said table including first and second address positions for each communication line, with each position storing the address of an area (40) of storage (3) reserved for storing control information (parameter/status) corresponding to the transmit interface and to the receive interface of each communication line,

transferring the starting address to each adapter by means of a first set of output PIO operations,

for a first communication:

causing the central control unit to send, for each line, by means of an output PIO operation termed "start line initial (SLI)", a first code (SELECT LAD) specifying the address of an adapter to be selected,

causing the adapter that recognized its address to send an acknowledgment signal and storing the first code in the adapter,

causing the central control unit to send a second code specifying the address of the selected interface of a selected line (SPIA) and an initialization command intended for the selected interface,

causing the microprocessor of the adapter to calculate the table addresses corresponding to the interfaces of the selected line according to the first and second codes and the starting address of the correspondence table, and transferring in cycle steal mode the information contained at these addresses in control blocks associated with the microprocessor storage locations assigned to the interfaces of said line,

causing information in the parameter area assigned to the selected interface and the corresponding data to be exchanged in cycle steal mode between the central control unit and the adapter,

for operations in the normal exchange mode:

causing the central control unit to send, by means of an output PIO operation termed "start line (SL)", the first code specifying the address of an adapter to be selected,

causing the adapter that recognized its address to send an acknowledgment signal,

sending the second code specifying the address of the selected interface of a line used by the selected adapter to locate the control block containing the address of the parameter/status area assigned to the interface, and a message transfer command intended for the interface,

exchanging in cycle steal mode the information in the parameter area located at the address contained in the control block so located, from the CCU storage to the parameter area assigned to the interface in the microprocessor storage.

2. A method according to claim 1, characterized in that the parameter area assigned to each interface includes the identification of the interface.

3. A method according to claim 2, characterized in that it includes the steps of:

sending to all adapters, by means of an output PIO operation termed "get line identification", upon completion of an operation involving an interface, a third code recognized by them,

causing the adapter having the request for service with the highest priority level to send the interface address contained in the parameter area, and

transferring in cycle steal mode the status information from a status area assigned to the interface in the microprocessor storage to the status area assigned to the interface in the CCU storage.

4. A method according to any one of the preceding claims, characterized in that the correspondence table (LNVT) includes a number of positions equal to the maximum number 2n of interfaces that can be managed by the controller and in that the number of reserved control information (parameter/status) areas in the CCU storage is equal to the maximum number 2n of interfaces, each area being associated with a chain of storage locations used for storing data to be exchanged by the corresponding interface.

5. A method according to any one of the preceding claims, characterized in that the initialization command causes initialization parameters and associated initialization data characterizing the type of interface conerned to be transferred to the parameter area of the microprocessor storage.

6. A method according to any one of the preceding claims, characterized in that the first code specifying the adapter address includes:

a first field (LAD) containing a sufficient number of bits to count up to n/k in binary notation, with 2k being the maximum number of interfaces that can be connected to a board comprising one or two adapters, the first board connected to the input/output bus having a first field (LAD) that is all-zeros and the last board connected to the bus having a first field (LAD) that is all-ones,

a second field (SELECT) in which a first bit is set to a first binary value and a second bit is set to a second binary value for addressing the first k/2 interfaces, and the first bit is set to the second binary value and the second bit to the first binary value for addressing the next k/2 interfaces.

7. A method according to claim 6, characterized in that the third code, in order that it may be recognized by all adapters, includes a first field (LAD) that is all-zeros and a second field (SELECT) in which the first and the second bits are both set to the same binary value.

8. A device for implementing the method according to claim 6, characterized in that each adapter comprises means for generating an address recognition signal including:

a first circuit (51) whose output supplies a first bit pattern representative of the number of the board on which the adapter is located,

a second circuit (52) whose output supplies a second bit pattern representative of the type of panel,

means (53) for comparing the first field (LAD) onto the input/output bus with the first bit pattern to supply an output signal indicating that said first field is coincident with the first pattern,

a third circuit (58, 59, 83, 84) supplying the address recognition output signal when the first and second bits of the second field (SELECT) onto the input/output bus match the type of board.

9. A device according to claim 7, characterized in that each adapter includes means for generating an adapter selection signal, comprising:

a first circuit (51) whose output supplies a first bit pattern representative of the number of the panel on which the adapter is located,

a second circuit (52) whose output supplies a second bit pattern representative of the type of panel,

means (53) for comparing the first field (LAD) onto the input/output bus with the first bit pattern to supply an output signal indicating that said first field is coincident with the first pattern,

a third circuit (58, 59, 83, 84) whose output supplies an address recognition signal when the first and second bits of the second field (SELECT) onto the input/output bus match the type of panel,

a fourth circuit (56, 65) whose output supplies a selection signal when the third code is recognized and the second and third bits both have the same binary value,

a fifth circuit (66, 67) that receives the recognition signal and the selection signal and generates the adapter selection signal when either signal is present.

# FIG. 1

FIG.2

# FIG.3

VERS BUS IOS

DONNEES     ETIQUETTES

39

LOGIQUE

G1     G2

CONTR.

ADAPT
SEL

MICRO PROCESSEUR SP

MEM COM

LS

REG.     REG.

38

G3     G4

35

36

37

S

INTERFACES

R

T

MODEM

TERMINAL

FIG. 4

# FIG.5

# FIG. 6

CARTE SP